Europäisches Patentamt

European Patent Office

Office européen des brevets

(19)

(11) Veröffentlichungsnummer: **0 045 821**
**A1**

(12) EUROPÄISCHE PATENTANMELDUNG

(21) Anmeldenummer: 80107664.7

(22) Anmeldetag: 05.12.80

(51) Int. Cl.³: **F 24 J 3/02**
**E 04 D 3/24, E 04 B 7/08**

(43) Veröffentlichungstag der Anmeldung:
17.02.82 Patentblatt 82/7

(84) Benannte Vertragsstaaten:
AT BE CH DE FR GB IT LI LU NL SE

(71) Anmelder: Schulze-Fielitz, Eckhard, Dr.
Florastrasse 9
D-4300 Essen(DE)

(72) Erfinder: Schulze-Fielitz, Eckhard, Dr.
Florastrasse 9
D-4300 Essen(DE)

(54) Multifunktionales Rinnendach und Montageverfahren.

(57) Die Erfindung ist ein vorzugsweise aus Blech hergestelltes Dach aus nebeneinander liegenden, miteinander und auf einer Unterkonstruktion befestigten Rinnen, das durch Ausrüstung mit verschiedenen Zusatzelementen und andere Maßnahmen nicht nur als Dachkonstruktion, sondern zusätzlich und gleichzeitig als flacher Sonnenkollektor (Fig. 1), konzentrierender Sonnenkollektor (Fig. 2), Dachheizungssystem bzw. Dachkühlungssystem (Fig. 3), Absorber / Wärmetauscher (Fig. 4), Schwerkraftkühlung (Fig. 5), Destille bzw. Saline (Fig. 6), Wasserkollektor (Fig. 7), Zisterne (Fig. 8), Pflanztrog (Fig. 9), Becken (Fig. 10) und/oder Speicher (Fig. 11) genutzt werden kann und mit dieser Vielfachnutzung über die üblichen Funktionen eines Daches wie Witterungsschutz etc. hinaus Aufgaben wie Energiegewinnung, Wasserversorgung, Speicherung etc. auf wirtschaftliche Weise leistet.

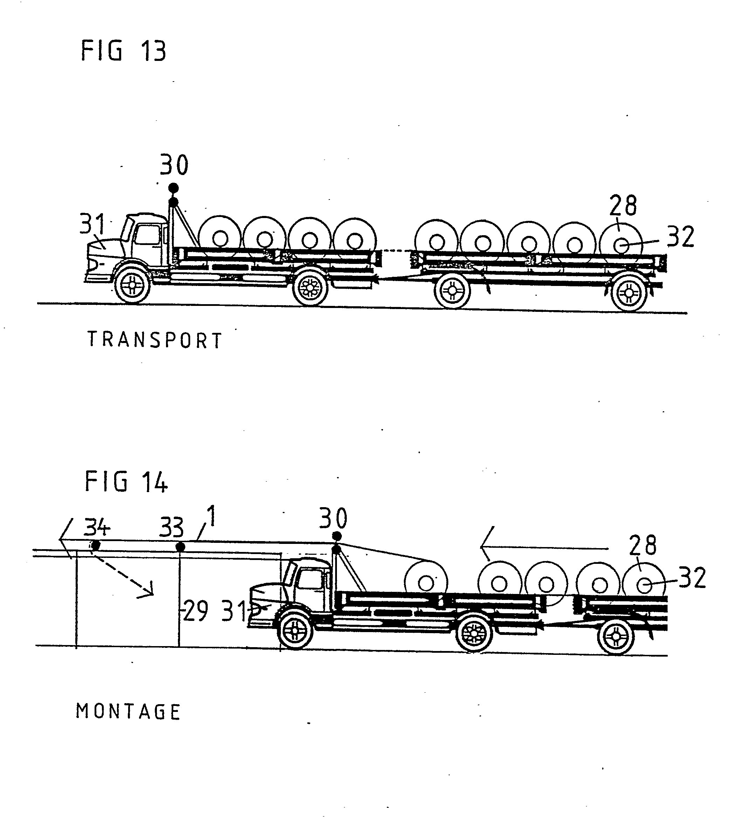

Das Montageverfahren (Fig. 14) ist mit Hilfe von umgerüsteten Lastwagen ohne Zwischenabladen und ohne weitere Hebezeuge eine Methode, bei der die ggfs. sehr langen Dachbleche von der Blechrolle abgewickelt, durch eine auf dem Lastwagen montierte Profilformmaschine beidseitig abgekantet und durch Vortrieb der Profilformmaschine auf eine Unterkonstruktion geschoben, ggfs. zusätzlich über Umlenkrollen gezogen werden und erst durch Befestigung untereinander und an der Unterkonstruktion ihre Einbauform erhalten. Die Profilformmaschine und damit der Vortrieb der Bleche kann vom Motor des Lastwagens betrieben werden.

./...

FIG 12

22

15

DESTILLE

16

15

STRAHLUNG

14

14

14

RINNE 1

1

STRAHLUNG

KONZENTR.
SONNENKOLLEKTOR

14

BECKEN

Multifunktionales Rinnendach und Montageverfahren

Gegenstand der Erfindung ist ein multifunktionales Rinnendach mit Montageverfahren zur Oberdachung beliebiger Gebäude oder Gebäudegruppen oder anderweitig genutzter Flächen, wobei das Rinnendach nicht nur die üblichen überdeckenden, raumschließenden, witterungsschützenden und wärmedämmenden Eigenschaften hat, sondern durch im folgenden beschriebene Möglichkeiten der Ausbildung, Umrüstung, Nachinstallation von Zusatzelementen oder Oberflächenbehandlung eine Reihe von zusätzlichen Funktionen erfüllen kann wie Energiegewinnung, Wasserspeicherung, Nahrungsmittelproduktion und andere.

Wenn auch die Erfindung für die Oberdachung beliebiger Gebäude oder Flächen gedacht ist, so ist ein wichtiges Anwendungsgebiet die Oberdachung von Gebäuden oder ganzen Quartieren im Massenwohnungsbau zu minimalen Kosten z. B. der Entwicklungsländer mit dem Ziel einer weitgehenden Autarkie solcher Gebäude oder Quartiere z. B. in Bezug auf Wasserversorgung, Wasserspeicherung, Wassererwärmung, Wasserreinigung, Energiegewinnung, Raumheizung, Raumkühlung usw.

Nach Stand der Technik ist bekannt eine Dach- oder Wandkonstruktion als Rinnendach (z. B. durch Patent- und Hilfsgebrauchsmusteranmeldung BRD durch Lima et Compagnie vom 16.11.1971 und Ausführungsbeispiele), angewendet bisher für hallenartige Gebäude.
Bekannt ist das Prinzip des Absorberdaches (z. B. Bernd Stoy: Das Dach aus dem die Wärme kommt, Die Welt 29.11.1978).
Bekannt ist das sogenannte skytherm-System von Harold Hay (siehe Konya: design primer for hot climates, Verlag The Architecture Press, London, Seite 98).

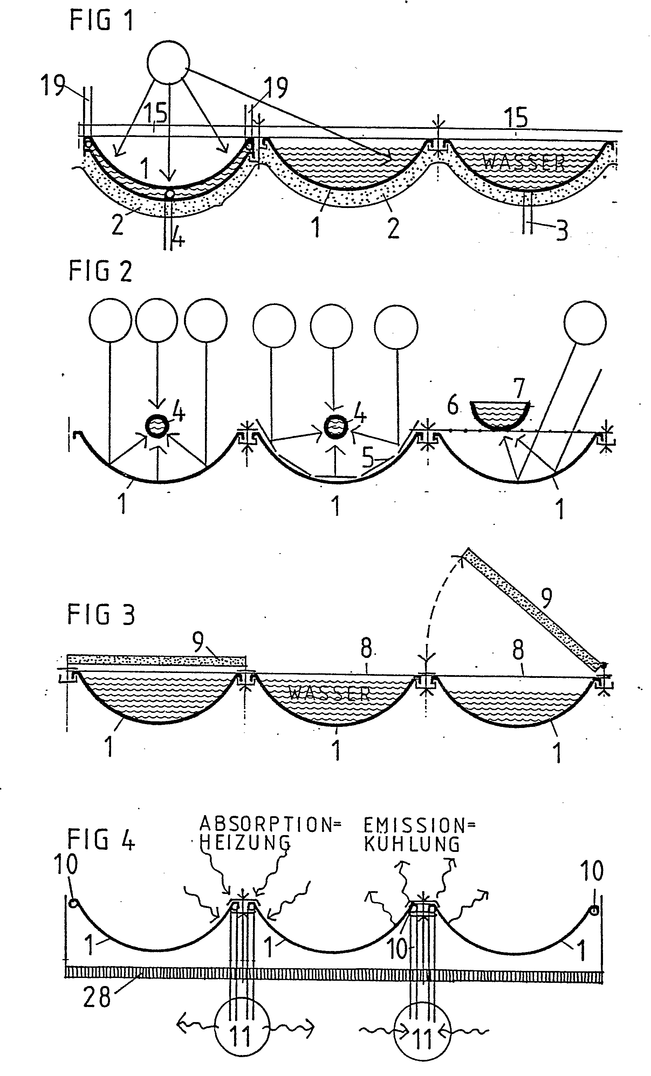

1. Das Rinnendach als flacher Sonnenenergiekollektor (Fig. 1)
Zweck der Erfindung ist es, durch unten beschriebene, zusätzliche
Elemente und Maßnahmen die Rinnen 1 als flachen Sonnenenergiekollektor auszubilden und zu nutzen zur Gewinnung von Niedertemperaturwärme, z. B. für Raumheizung und Brauchwasser.
Das Rinnendach nach Stand der Technik, jedoch die Rinnen 1 mit
unterer Wärmeisolierung 2 z. B. aus Kunststoffschaum und dunkler
Oberfläche und einer luftdichten Abdeckung aus strahlungsdurchlässigen Elementen 15, z. B. aus Glas oder Kunststoff, oder aber
das Rinnendach aus zwei übereinanderliegenden Rinnen 1, die an den
Längsseiten und vor Kopf wasserdicht verschlossen sind, deren
untere mit unterer Wärmeisolierung 2, deren obere mit wärmeabsorbierender Oberfläche, der Hohlraum zwischen beiden mit Wasser gefüllt und beide mit einer luftdichten Abdeckung aus strahlungsdurchlässigen Elementen 15 mit einer Rohrzuführung 24 im unteren und
einer Ableitung 19 im oberen Bereich der Rinnen 1. Bei Sonneneinstrahlung erwärmt sich das Wasser und kann für Heizzwecke oder
Brauchwasser genutzt werden.

Vorteilhafte Wirkung ist u. a. die wirtschaftliche Herstellung
großer kontinuierlicher Sonnenkollektorflächen von der Rolle, wobei
bei einer unteren Rohrzuführung 24 und einer oberen Ableitung 19
selbst bei waagerechter Anordnung der Rinnen 1 des Daches durch den
Auftrieb des erwärmten Wassers ein Schwerkraftkreislauf ohne Pumpen
möglich ist.

2. Das Rinnendach als konzentrierender Sonnenenergiekollektor (Fig. 2)
Zweck der Erfindung ist es, durch unten beschriebene zusätzliche
Elemente und Maßnahmen die Rinnen 1 nach Stand der Technik als
konzentrierenden Sonnenenergiekollektor auszubilden und zu nutzen
zur Gewinnung von Wärme z. B. für Raumheizung und Brauchwasser oder
von Prozeßwärme z. B. in Form von Heißwasser oder Dampf zur Nutzung
für Maschinenantrieb, Stromerzeugung u. ä. in nachgeschalteten
Prozessen.

Das Rinnendach nach Stand der Technik, jedoch die Rinnnen 1 mit
spiegelnder Oberfläche, sei es aus ggfs. poliertem Aluminium oder
Edelstahl, sei es mit Spiegelfolie kaschiert oder mit spiegelnden
Zusatzelementen 5 ausgekleidet, bildet geometrisch eine hinreichend
genaue Annäherung an einem parabelförmigen Trogquerschnitt, der die

Sonneneinstrahlung auf eine Brennlinie konzentriert. In der Brennlinie befindet sich ein dunkler, energieabsorbierender Körper, z. B. ein Absorberrohr 4, indem eine geeignete wärmetransportierende Flüssigkeit, z. B. Wasser oder Öl zirkuliert. Durch die durch das Absorberrohr 4 konzentrierte Sonneneinstrahlung wird die Flüssigkeit soweit erhitzt oder verdampft, daß die gewonnene Energie z. B. zur Heizung, Stromerzeugung oder andere technische Prozesse genutzt werden kann. Zur Erzeugung höherer Temperaturen kann das Absorberrohr 4 der mit dem Sonnenstand wandernden Brennlinie nachgeführt werden.

Vorteilhafte Wirkung ist u. a., daß die Rinnen 1 des Daches gleichzeitig als Reflektor eines konzentrierenden Sonnenenergiekollektors wirken, wobei die Reflektion der Sonnenenergie und ihre Abführung im Absorberrohr 4 zur Temperierung der Räume unter den Rinnen 1 beitragen. Die Sonnenenergiesammelflächen sogenannter "Sonnenfarmen" können gleichzeitig als Dächer von Gebäuden genutzt werden.

3. Das Rinnendach als Dachheizung / Dachkühlung (Fig. 3)
Zweck der Erfindung ist es, durch unten beschriebene zusätzliche Elemente und Maßnahmen die Rinnen 1 als Deckenheizungs- bzw. Deckenkühlungssystem für die unter dem Dach angeordneten Räume auszubilden und zu nutzen.

Das Rinnendach nach Stand der Technik, jedoch die Rinnen 1 mit oberen beweglichen, z. B. verschieblichen oder klappbaren, wärmeisolierenden Elementen 9 z. B. aus Polyurethantafeln versehen und mit Wasser gefüllt. Zur Vermeidung der Wasserverdunstung können die Rinnen 1 z. B. mit einer strahlungsdurchlässigen Folie 8 dampfdicht verschlossen sein. Je nach Witterung und erwünschter Wirkung werden die wärmeisolierenden Elemente 9 geöffnet oder geschlossen, entweder wird z. B. bei Sonneneinstrahlung und Öffnung der wärmeisolierenden Elemente 9 das Wasser in den Rinnen 1 erwärmt und wirkt als Deckenstrahlungsheizung für die darunter liegenden Räume auch nach Schließung der wärmeisolierenden Elemente 9, die dann z. B. nachts oder bei bedecktem Himmel die Wärmeabstrahlung nach außen verhindern, oder aber es wird z. B. bei Nacht und Öffnung der wärmeisolierenden Elemente 9 das Wasser ausgekühlt und wirkt für die darunter befindlichen Räume als Deckenkühlung auch nach Schließung der wärmeisolierenden Elemente 9, die dann die Erwärmung z. B. durch Sonneneinstrahlung verhindern.

Vorteilhafte Wirkung ist u. a., daß die Rinnen 1 als Deckenstrahlungsheizung bzw. -kühlung wirken in Klimata mit größeren Temperaturdifferenzen zwischen Tag und Nacht ohne Verbrauch von Primärenergie und ohne weitere Aggregate.

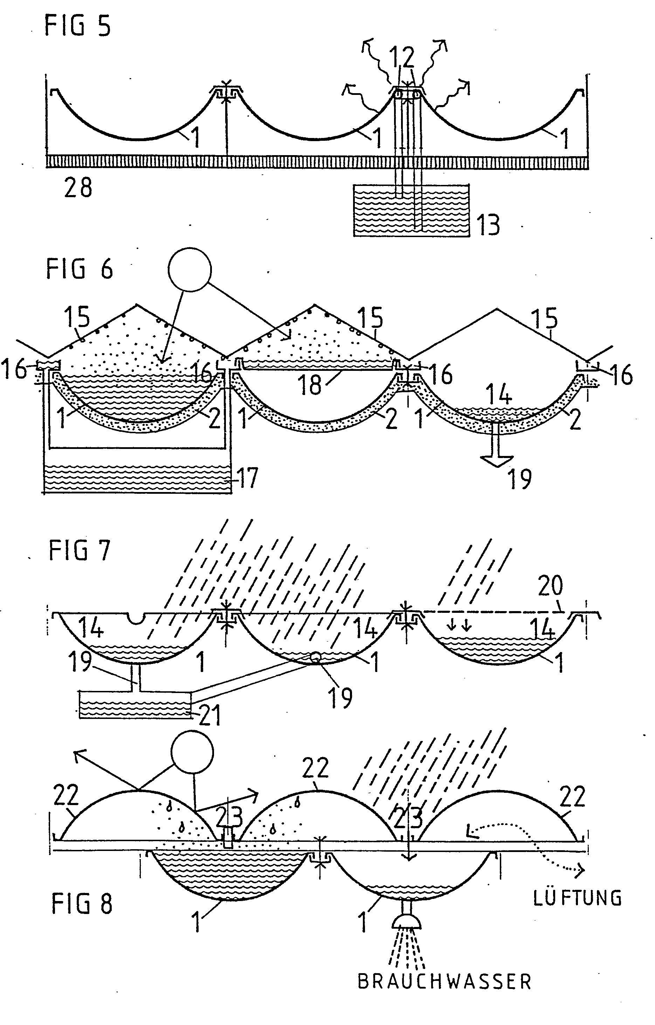

4. Das Rinnendach als Absorber (Fig. 4)

Zweck der Erfindung ist es, durch unten beschriebene zusätzliche Elemente und Maßnahmen die Rinnen 1 nach Stand der Technik als Absorber bzw. Wärmetauscher auszubilden und zu nutzen zur Absorption oder Emission von Energie, z. B. zur Heizung oder Kühlung von Räumen.

Das Rinnendach nach Stand der Technik, jedoch die Rinnen 1 mit unterer Wärmeisolierung z. B. als Hängedecke 28 und dunkler, absorbierender Oberfläche und wärmeleitend über Rohre 1o, in denen eine Flüssigkeit zirkuliert, mit einer Wärmepumpe 11 verbunden, wobei die Rinnen 1 als Absorber / Wärmetauscher wirken und bei Überwärmung der Flüssigkeit gegen die Außentemperatur Energie an die Umgebung abgeben (Raumkühlung) oder bei Unterkühlung gegen die Außentemperatur Energie aus der Umgebung aufnehmen (Raumheizung), und zwar aus direkter Sonneneinstrahlung, Diffusstrahlung, Niederschlag, Luft, Wind, Latentwärme aus Kondensat.

Vorteilhafte Wirkung ist u. a., daß die statisch tragenden Rinnen 1 bei wärmeleitender Verbindung mit den Rohren 1o als Absorber / Wärmetauscher wirken und daß bei kraftschlüssiger Verbindung mit den Rinnen 1 die Rohre 1o auch statisch wirksam sind.

5. Das Rinnendach als Schwerkraftkühlung (Fig. 5)

Zweck der Erfindung ist es, durch unten beschriebene zusätzliche Elemente und Maßnahmen die Rinnen 1 nach Stand der Technik als Wärmetauscher eines Schwerkraftkühlsystems auszubilden und zu nutzen zur Kühlung von Räumen unterhalb der Dachfläche.

Das Rinnendach nach Stand der Technik, jedoch die Rinnen 1 wärmeleitend mit z. B. im Dachgefälle laufenden Rohren 12 verbunden und an einem im Rauminneren befindlichen Raumkühltank / Kühlwassertank 13 angeschlossen. Bei Erwärmung des Wassers im Raumkühltank / Kühlwassertank 13 steigt das wärmere Wasser in den Rohren 12 nach oben und kühlt z. B. nachts über die Rinnen 1 als Wärmetauscher aus und fließt gekühlt in den Raumkühltank / Kühlwassertank 13 zurück. Wenn die Außentemperatur höher als die Innenraumtemperatur ist, kommt die Zirkulation zum Stillstand. Das System ist nur geeignet für Klimata mit größeren Temperaturunterschieden zwischen Tag und Nacht.

Vorteilhafte Wirkung ist u. a. eine Raumkühlung oder Wasserkühlung ohne Energieverbrauch durch Nutzung der Temperaturdifferenz zwischen Tag und Nacht

.6. Das Rinnendach als Destille (Fig. 6)
Zweck der Erfindung ist es, durch unten beschriebene zusätzliche Elemente und Maßnahmen die Rinnen 1 nach Stand der Technik als Destille und/oder Saline auszubilden und zu nutzen zur Gewinnung von Trinkwasser oder Süßwasser aus verunreinigtem Wasser oder Salzwasser und/oder zur Gewinnung von Salz aus Salzwasser.

Das Rinnendach nach Stand der Technik, jedoch die Rinnen 1 mit unterer Wärmeisolierung z. B. aus aufgebrachtem Kunststoffschaum 2 mit dunkler wärmeabsorbierender Oberfläche, einer geneigten luftdichten Abdeckung aus strahlungsdurchlässigen Elementen 15 z. B. aus Glas oder Kunststoff und Destillatsammelrinnen 16 am Fußpunkt der strahlungsdurchlässigen Elemente 15. Die Funktion der Destillatsammelrinnen 16 kann auch von den benachbarten Rinnen 1 des Rinnendaches übernommen werden, ggfs. kann in die Rinnen 1 eine horizontale Schale 18 mit dunkler Oberfläche eingelegt werden, um eine möglichst dünne Wasserschicht zu haben. Bei Sonneneinstrahlung verdampft das verunreinigte oder salzige Wasser in der Rinne 1 bzw. der Schale·18, kondensiert an der geneigten Abdeckung aus strahlungsdurchlässigen Elementen 15 und rieselt als gereinigtes bzw. entsalztes Destillat (Trinkwasser) in die Destillatsammelrinnen 16 bzw. die benachbarten Rinnen 1 des Rinnendaches und wird in einem Trinkwassertank 17 gesammelt. Bei der Destillation von Salzwasser / Meerwasser kann gleichzeitig Salz produziert werden.

Vorteilhafte Wirkung ist u. a., daß die Rinnen 1 des Daches gleichzeitig als Wasserbecken einer Destille wirken, die auf dem nichtbeschatteten Dach einen großen Wirkungsgrad erreicht.

7. Das Rinnendach als Wasserkollektor (Fig. 7)
Zweck der Erfindung ist es, durch unten beschriebene zusätzliche Elemente und Maßnahmen die Rinnen 1 nach Stand der Technik als Wasserkollektor auszubilden und zu nutzen.

Das Rinnendach nach Stand der Technik, ggfs. mit geringer Neigung der Rinnen 1 zu den Ableitungen 19 und ggfs. Abschottungen 14 vor Kopf der Rinnen 1 und ggfs. verschließbaren Ableitungen 19. Das Niederschlagswasser wird in den Rinnen 1 aufgefangen, durch die ggfs. mit Sieben versehenen Ableitungen 19 in den Brauchwassertank 21 abgelassen.

Vorteilhafte Wirkung ist u. a., daß die Rinnen 1 des Daches gleichzeitig eine große Sammelfläche aus geeignetem Material darstellen, die durch ihre Doppelnutzung wirtschaftlich ist.

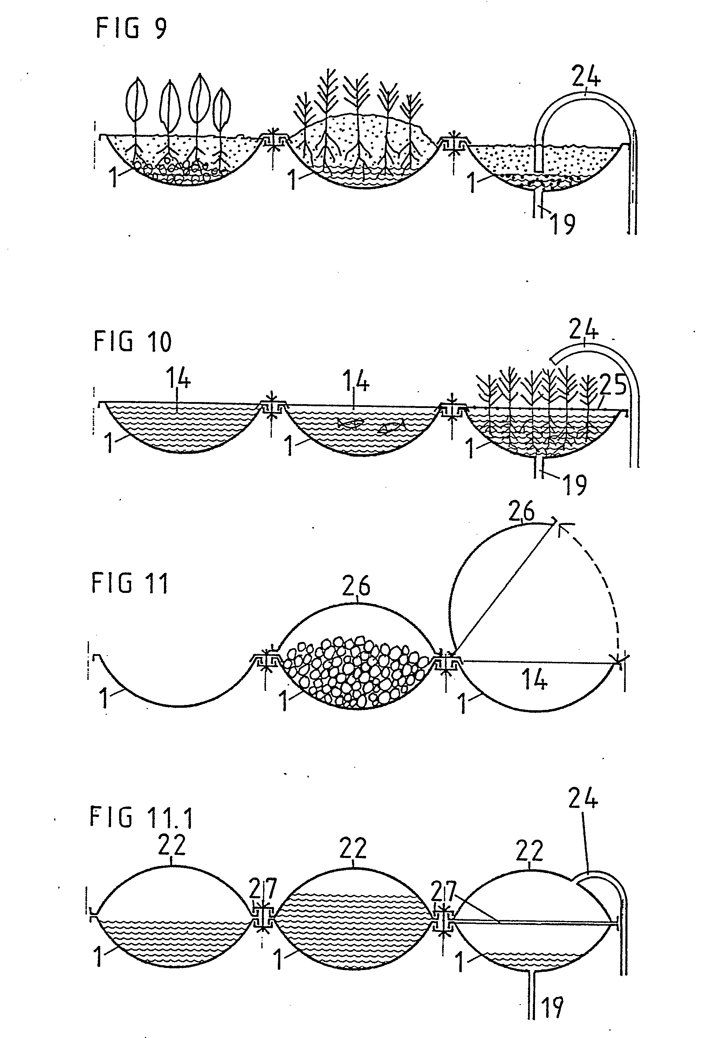

8. Das Rinnendach als Zisterne (Fig. 8)

Zweck der Erfindung ist es, durch unten beschriebene zusätzliche Elemente und Maßnahmen die Rinnen 1 nach Stand der Technik als Zisterne auszubilden und zu nutzen zum Sammeln, Speichern, Konservieren und Verteilen von Niederschlagwasser.

Das Rinnendach nach Stand der Technik, jedoch die Rinnen 1 entweder mit horizontalen Elementen oder mit stehenden Schalen 22 oder in anderer Form aus opakem Material abgedeckt. Zwischen den Schalen 22 als Sammelfläche sind lineare oder punktförmige verschließbare Einläufe vorgesehen. Die stehenden Schalen 22 dienen als Sammelfläche, Abdeckung und Schutz gegen Verdunstung, die hängenden Rinnen 1 als Wasserbehälter (Zisterne).

Vorteilhafte Wirkung sind u. a. die zusätzliche Nutzung der Rinnen 1 als Wasserreservoir, wobei deren Kapazität ausreicht, um im regenarmen Klima ggfs. den gesamten Niederschlag der Regenzeit für die Trockenzeit zu speichern. Der zweischichtige Aufbau der Dachzisterne aus den Rinnen 1 und den Schalen 22 wirkt bauphysikalisch als ggfs. durchlüftetes Doppeldach. Im gefüllten Zustand wirkt die Wassermasse in den Rinnen 1 der Dachzisterne als Wärmespeicher. Bei Verdunstung des Wassers einerseits und Kondensation des Wassers an den Unterseiten der Schalen 22 andererseits wird die Latentkälte bzw. Latentwärme des in den Rinnen 1 gespeicherten Wassers genutzt. Die Dachzisterne kann ggfs. sämtliche Verbrauchsstellen in den Nutzräumen überdecken, womit sich ein Rohrleitungsnetz erübrigt.

9. Das Rinnendach als Pflanztrog (Fig. 9)

Zweck der Erfindung ist es, durch unten beschriebene zusätzliche Elemente und Maßnahmen die Rinnen 1 nach Stand der Technik als Pflanztrog auszubilden und zu nutzen ggfs. mit unterer Wurzelbewässerung in

den Rinnen 1 mit Vermeidung der Versickerung und Verminderung der Verdunstung bei Bewässerung der Kulturen.

Das Rinnendach nach Stand der Technik, die Rinnen 1 aus geeignetem Material und ggfs. zusätzlicher Oberflächenbehandlung wird als Pflanzfläche mit Erde gefüllt.

Vorteilhafte Wirkungen sind u. a., daß die aufgebrachte Erdschicht bzw. Bepflanzung in den Rinnen 1 als Wärmespeicher bzw. Schattenspender zur Temperierung der unter den Rinnen 1 liegenden Nutzräume beiträgt, daß Wurzelbewässerung in den Rinnen 1 den Wasserverlust durch Versickern vermeidet und den Wasserverlust durch Verdunstung verringert, daß die Rinnen 1 ggfs. als Verteilsystem für Nährflüssigkeit dienen können.

lo. Das Rinnendach als Dachbecken (Fig. lo)

Zweck der Erfindung ist es, durch unten beschriebene zusätzliche Elemente und Maßnahmen die Rinnen 1 nach Stand der Technik als Dachbecken auszubilden und zu nutzen, z. B. als Algenbecken, Fischteich, Aquakultur, Sprinklerbecken u. ä.

Das Rinnendach nach Stand der Technik, jedoch die Rinnen 1 vor Kopf durch eine Abschottung 14 geschlossen, ggfs. mit einer Rohrzuführung 24 und einer Ableitung 19, ggfs. mit Stützgitter 25 als Haltekonstruktion für Vegetation der Aquakultur.

Vorteilhafte Wirkung ist u. a. die gleichzeitige Nutzung der Rinnen 1 als Becken, wobei eine solche Doppelnutzung zur Temperierung der unter den Rinnen 1 liegenden Räume beiträgt.

11. Das Rinnnendach als Behälter (Fig. 11)

Zweck der Erfindung ist es, durch unten beschriebene zusätzliche Elemente und Maßnahmen die Rinnen 1 nach Stand der Technik als Behälter auszubilden und zu nutzen z. B. für Schüttgut bzw. Flüssigkeiten.

Das Rinnendach nach Stand der Technik, jedoch die Rinnen 1 mit Abschottungen 14 und mit verschiebbaren und klappbaren ggfs. verschließbaren, wasserableitenden Elementen 26 überdeckt (zur Speicherung von Schüttgut) bzw. über den Rinnen 1 mit stehenden Schalen 22, die mit einer Wasserdichtung 27 verbunden sind (zur Speicherung von Flüssigkeiten), ggfs. mit einer Rohrzuführung 24 und einer Ableitung 19.

Vorteilhafte Wirkung ist u. a., daß die Rinnen 1 des Daches ggfs. in Kombination mit Schalen 22 gleichzeitig als Behälter dienen, diese Doppelnutzung bzw. auch die Doppelschaligkeit zur Temperierung der Räume unter dem Rinnendach beitragen.

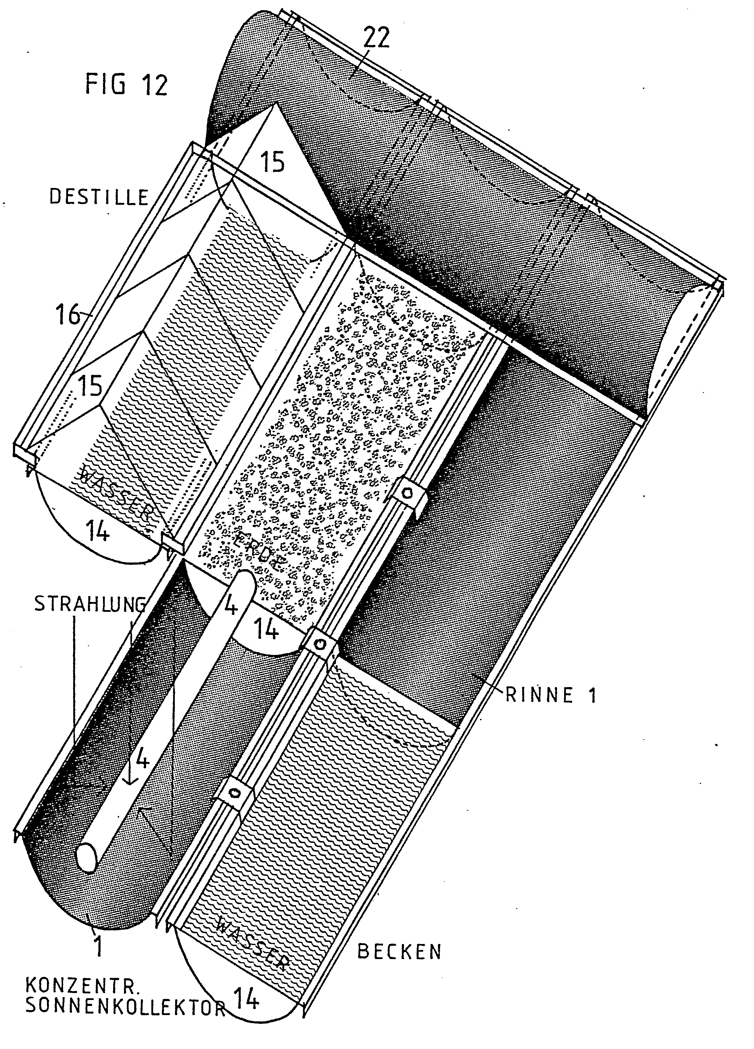

12. Montageverfahren des Rinnendaches (Fig. 12)
Rinnendächer nach Stand der Technik mußten bisher entweder aus in der Werkstatt verformten Blechen hergestellt werden, womit sich eine enge Begrenzung der Rinnenlängen durch die möglichen Transportabmessungen ergab, oder, wenn gerollt transportiert, auf der Baustelle abgeladen, am Boden verformt und dann wegen ihrer großen Länge mit vielen Hebezeugen auf umständliche Weise montiert werden.

Mit dem Montageverfahren des Rinnendaches nach Anspruch 12 werden die späteren Rinnen 1 als Rollen 28 transportiert, von der Rolle 28 abgerollt, durch eine auf dem Lastwagen 31, ggfs. auch auf der Unterkonstruktion 29 montierten Profilformmaschine 30 an beiden Längsseiten verformt und auf die Unterkonstruktion 29 geschoben und/oder gezogen.

Vorteilhafte Wirkung ist u. a. eine Vereinfachung der Montage der Rinnen 1 auch aus sehr langen Blechen ohne Zwischenabladung, wobei Transport, Verformung und Montage der Bleche durch den gleichen umgerüsteten Lastwagen 31 erfolgen und weitere Hebezeuge überflüssig sind. Die Montagekosten werden verringert und die Montageleistung vergrößert.

Allgemeine vorteilhafte Wirkungen

Bisher bekannte Rinnendächer nutzen nicht die bei dieser Konstruktionsweise des Daches vielfältigen Möglichkeiten für Energiegewinnung, Wasserversorgung, Speicherung, Nahrungsproduktion usw. und die damit verbundenen Möglichkeiten der Verbesserung des Innenraumklimas.
Das multifunktionale Rinnendach nach Erfindung erreicht mit Zusatzelementen bzw. geringfügigen Änderungen mit geringen zusätzlichen Kosten unter Nutzung und Verbesserung der gegebenen Funktionen zusätzlich

- R a u m h e i z u n g durch Nutzung der Rinnen 1 als flachen Sonnenkollektor, konzentrierende Sonnenkollektor, Deckenheizkörper, Absorberfläche oder Wärmbecken

- **R a u m k ü h l u n g**  durch Nutzung der Rinnen 1 als Deckenkühlkörper, Absorber / Wärmetauscher (mit Wärmepumpe) oder Wärmetauscher (mit Schwerkraftkühlung)
- **W a s s e r s a m m l u n g**  durch Nutzung der Rinnen 1 als
  Wassersammelfläche
- **W a s s e r s p e i c h e r u n g**  durch Nutzung der Rinnen 1 als
  Zisterne
- **W a s s e r r e i n i g u n g / W a s s e r e n t s a l z u n g**
  durch Nutzung der Rinnen 1 als Destille
- **S a l z g e w i n n u n g**  durch Nutzung der Rinnen 1 als Destille
- **N a h r u n g s m i t t e l p r o d u k t i o n**  durch Nutzung der
  Rinnen 1 als Pflanztrog, Becken (z. B. für Aquakulturen, Algen,
  Fische)
- **B r a u c h w a s s e r e r w ä r m u n g**  durch Nutzung der
  Rinnen 1 als flachen Sonnenkollektor, konzentrierenden Sonnenkollektor, Wärmbecken oder Absorber / Wärmetauscher (mit Hilfe
  einer Wärmepumpe)
- **B r a u c h w a s s e r -** oder **T r i n k w a s s e r k ü h l u n g**
  durch Nutzung der Rinnen 1 als Wärmetauscher (mit Schwerkraftkühlung) oder Kühlbecken
- **P r o z e ß w ä r m e**  (mit einigen möglichen nachgeschalteten
  Energieumwandlungen) durch Nutzung der Rinnen 1 als konzentrierenden Sonnenkollektor
- **S p e i c h e r u n g**  durch Nutzung der Rinnen 1 als Behälter
  (für Feststoffe) oder als Tank (für Flüssigkeiten).

Durch Umrüstung oder Nachrüstung der Rinnen 1 kann je nach klimatischen
Gegebenheiten eine teilweise oder völlige Autarkie z. B. in Bezug auf
Wasserversorgung oder Raumheizung erreicht werden.

Die ökonomische Überdachung aus den Rinnen 1 nach Stand der Technik
erhält durch die Mehrfachnutzung einen höheren Gebrauchswert, Aufwand
an anderer Stelle z. B. für Heizsysteme, Wasserspeicher, Leitungen oder
Primärenergie kann verringert oder vermieden werden.
In der Regel verbessern die zusätzlichen Nutzungen der Rinnen 1 die
bauphysikalischen Eigenschaften des Daches z. B. durch Mehrschichtigkeit,
Speichermasse, Verdunstungskälte oder Kondensationswärme von Wasser auf
oder im Dach.
Einen Teil der angeführten zusätzlichen Funktionen erfüllen die
Rinnen 1 gleichzeitig, z. B. Energieabsorbtion und Wasserkollektion.

0045821

- lo -

Patentansprüche

1. Multifunktionales Rinnendach aus nebeneinander angeordneten Rinnen 1 mit verschiedenen Zusatzelementen als flacher Sonnenkollektor, dadurch gekennzeichnet, daß die Rinnen 1 an ihrer Unterseite wärmeisoliert sind z. B. durch aufgebrachten Kunststoffschaum 2, daß ihre Oberseite eine dunkle wärmeabsorbierende Oberfläche hat und durch strahlungsdurchlässige Elemente 15 aus z. B. Glas oder Kunststoff abgedeckt und allseitig luftdicht verschlossen und mit Wasser gefüllt sind. Die Rinnen 1 sind durch Rohre 3 mit Heizelementen oder Warmwasserzapfstellen verbunden (Fig. 1).

Multifunktionales Rinnendach nach Anspruch 1 jedoch mit zwei Rinnen 1 in geringem Abstand übereinander angeordnet und der wasserführende Zwischenraum beider Rinnen 1 wasserdicht verschlossen, die untere Rinne 1 unten wärmeisoliert, die obere Rinne 1 mit dunkler wärmeabsorbierender Oberfläche (Fig. 1).

2. Multifunktionales Rinnendach aus nebeneinander angeordneten Rinnen 1 mit verschiedenen Zusatzelementen als konzentrierender Sonnenkollektor ausgebildet, dadurch gekennzeichnet, daß entweder die Oberseite der Rinnen 1 spiegelnd ausgebildet ist z. B. durch poliertes Aluminium oder Edelstahl oder eine aufkaschierte Spiegelfolie, oder aber durch Befestigung spiegelnder ggfs. beweglicher Zusatzelemente 5, und daß oberhalb jeder Rinne 1 sich ein mit einer wärmetransportierenden Flüssigkeit gefülltes Absorberrohr 4 mit wärmeabsorbierender Oberfläche befindet, das ggfs. beweglich ist. Das Absorberrohr 4 ist über ein ggfs. flexibles Rohrsystem mit Aggregaten zur Energienutzung oder Energieumwandlung verbunden (Fig. 2).

Multifunktionales Rinnendach nach Anspruch 2 als Kochspiegel ausgebildet, dadurch gekennzeichnet, daß statt des Absorberrohres 4 sich oberhalb der refektierenden Rinnen 1 im Bereich der wandernden Brennlinie der reflektierten Sonnenstrahlen sich eine Konstruktion z. B. in Form eines Rostes 6 befindet, auf dem Gefäße 7 wie z. B. Kochtöpfe im jeweiligen Brennpunkt situiert werden können (Fig. 2).

3. Multifunktionales Rinnendach aus nebeneinander angeordneten Rinnen 1 mit verschiedenen Zusatzelementen als Dachheizung / Dachkühlung ausgebildet, dadurch gekennzeichnet, daß die Rinnen 1 durch eine Abschottung 14 vor Kopf geschlossen sind und mit Wasser gefüllte Schalen bilden, die z. B. durch eine strahlungsdurchlässige Folie 8
dampfdicht verschlossen sind. Oberhalb der Rinnen 1 befinden sich bewegliche, d. h. öffenbare oder schließbare, z. B. klappbare oder verschiebliche, ggfs. automatisch gesteuerte wärmeisolierende Elemente 9
ggfs. mit reflektierender Oberfläche an ihrer Ober- und/oder Unterseite
(Fig. 3).

4. Multifunktionales Rinnendach aus nebeneinander angeordneten
Rinnen 1 mit verschiedenen Zusatzelementen als Absorber bzw. Wärmetauscher ausgebildet, dadurch gekennzeichnet, daß die Rinnen 1 an
ihrer Unterseite wärmeisoliert sind, z. B. durch aufgebrachten Kunststoffschaum 2 oder eine an den Rinnen 1 befestigte Hängedecke 28, an
ihrer Oberseite eine dunkle wärmeabsorbierende Oberfläche haben, wärmeleitend und ggfs. kraftschlüssig mit am seitlichen Rand oder ggfs. an
weiteren Stellen der Rinnen 1 befestigten mit einer wärmetransportierenden Flüssigkeit gefüllten Rohren 1o verbunden sind, die ihrerseits an
eine Wärmepumpe 11 angeschlossen sind (Fig. 4).

5. Multifunktionales Rinnendach aus nebeneinander angeordneten
Rinnen 1 mit verschiedenen Zusatzelementen als Schwerkraftkühlsystem
ausgebildet, dadurch gekennzeichnet, daß die Rinnen 1 an der Unterseite
gegen den Innenraum wärmeisoliert sind z. B. durch aufgebrachten
Kunststoffschaum 2 oder eine an den Rinnen 1 befestigte Hängedecke 28,
an ihrer Oberseite eine wärmeemittierende Oberfläche haben und ggfs.
unterlüftet sind, wärmeleitend und ggfs. kraftschlüssig mit am seitlichen Rand befestigten wassergefüllten mit dem Dachgefälle laufenden Rohren 12 verbunden sind, deren Vorlauf im oberen und deren Rücklauf im unteren Bereich eines mit Wasser gefüllten Raumkühltanks /
Kühlwassertanks endet (Fig. 5).

6. Multifunktionales Rinnendach aus nebeneinander angeordneten
Rinnen 1 mit verschiedenen Zusatzelementen als Destille bzw. Saline
ausgebildet, dadurch gekennzeichnet, daß die Rinnen 1 an der Unterseite wärmeisoliert sind z. B. durch aufgebrachten Kunststoffschaum 2,
eine dunkle wärmeabsorbierende Oberfläche haben, vor Kopf durch eine
Abschottung 14 verschlossen sind und mit geneigten strahlungsdurchlässigen Elementen 15 aus z. B. Glas und Kunststoff abgedeckt
gegen die Außenluft dampfdicht verschlossen sind und mit Salzwasser oder unreinem Wasser gefüllt werden. Am Fußpunkt der strahlungsdurchlässigen Elemente 15 z. B. über dem Stoßpunkt der Rinnen 1 befinden sich Destillatsammelrinnen 16, die mit einem Trinkwassertank 17 verbunden sind. In die Rinne können auch flache Schalen 18 mit absorbierender Oberfläche eingestellt werden. Die Funktion der Destillatsammelrinnen 16 kann von den benachbarten Rinnen 1 übernommen werden (Fig. 6).

Multifunktionales Rinnendach nach Anspruch 6 als Saline ausgebildet, dadurch gekennzeichnet, daß die mit Salzwasser gefüllten Rinnen 1 mit Ableitungen 19 versehen sind zum Ablassen der nach Verdunstung des Wassers konzentrierten Sole zur Gewinnung von Salz (Fig. 6).

7. Multifunktionales Rinnendach aus nebeneinander angeordneten Rinnen 1 mit verschiedenen Zusatzelementen als Wasserkollektor ausgebildet, dadurch gekennzeichnet, daß die Rinnen 1 ggfs. vor Kopf durch eine Abschottung 14 geschlossen sind, ggfs. mit einem Sieb / Lochblech 2o abgedeckt, mit unteren Ableitungen 19 versehen sind, ggfs. verschließbar und ggfs. nicht am Tiefpunkt der Rinnen 1 angeordnet, jedoch mit einem tieferliegenden Brauchwassertank verbunden (Fig. 7).

8. Multifunktionales Rinnendach aus nebeneinander angeordneten Rinnen 1 mit verschiedenen Zusatzelementen als Zisterne ausgebildet, dadurch gekennzeichnet, daß die Rinnen 1 vor Kopf geschlossen und mit einer Abdeckung z. B. aus stehenden Schalen 22 versehen sind, die entweder quer zu den hängenden Rinnen 1 verlaufen oder gegen diese versetzt sind, dergestalt daß die Abdeckfläche aus den Schalen 22 am Tiefpunkt durch ggfs. verschließbare ggfs. mit Sieben versehene Einläufe 23 in die unteren Rinnen 1 als Zisterne entwässert. Die hängenden Rinnen 1 sind mit Wasserzapfstellen verbunden. Die stehenden Schalen 22 bestehen z. B. aus Aluminium mit großer Wärmereflektion und geringer Wärmeemission (Fig. 8).

9. Multifunktionales Rinnendach aus nebeneinander angeordneten Rinnen 1 mit verschiedenen Zusatzelementen als Pflanztrog ausgebildet, dadurch gekennzeichnet, daß die Rinnen 1 vor Kopf mit einer Abschottung 14 geschlossen sind, die Oberseite mit einer Schutzschicht gegen Korrosion bzw. Humussäuren versehen, im unteren Bereich mit einer Schicht aus wasserführendem Material, im oberen Bereich mit Humus, Torf u. ä . gefüllt, ggfs. mit Rohrzuführung 24 und Ableitung 19 für einen Kreislauf von Wasser oder Nährflüssigkeit für Wurzelbewässerung der Pflanzen (fig. 9).

10. Multifunktionales Rinnendach aus nebeneinander angeordneten Rinnen 1 mit verschiedenen Zusatzelementen als Becken ausgebildet, dadurch gekennzeichnet, daß die Rinnen 1 nach oben offen sind, vor Kopf mit einer Abschottung 14 geschlossen, mit geeigneter Oberflächenbehandlung der Oberseite, ggfs. mit einer Rohrzuführung 24, einer Ableitung 19 und einem Stützgitter 25 (Fig. 1o).

11. Multifunktionales Rinnendach aus nebeneinander angeordneten Rinnen 1 mit verschiedenen Zusatzelementen als Behälter ausgebildet, dadurch gekennzeichnet, daß die Rinnen 1 vor Kopf mit einer Abschottung 14 geschlossen sind und mit beweglichen, z. B. verschiebbaren oder klappbaren wasserableitenden Elementen 26 überdeckt sind oder daß stehende Schalen 22 über den Rinnen 1 mit diesen an den Längsseiten durch eine Wasserdichtung 27 verbunden sind, beide vor Kopf durch Abschottungen 14 geschlossen wie auch durch eine Wasserdichtung 27 miteinander verbunden sind, ggfs. mit Rohrzuführung 24 und Ableitung 19 (Fig. 11).

12. Montageverfahren des multifunktionalen Rinnendaches dadurch gekennzeichnet, daß die Rinnen 1 bzw. die Schalen 22 auch von sehr großer Länge aus Blechrollen 28 hergestellt werden, die auf einer Welle 32 liegend auf einem Lastwagen 31 transportiert und ohne Zwischenabladen durch eine auf dem Lastwagen 31 montierte Profilformmaschine 3o an beiden Längsseiten verformt und durch den Vortrieb der Profilformmaschine 3o auf eine Unterkonstruktion 29 geschoben, an diese und untereinander befestigt werden und ihre Einbauform durch Durchhang in der Querrichtung annehmen. Die Profilformmaschine 3o kann vom Motor des Lastwagens 31 angetrieben werden, ggfs. kann zusätzlich über an der Unterkonstruktion 29 befestigte Rollen 33 und Umlenkrollen 34 das Blech vom Motor des Lastwagens 31 gezogen werden (Fig. 12).

FIG 1

FIG 2

FIG 3

FIG 4

FIG 5

FIG 6

FIG 7

FIG 8

BRAUCHWASSER

LÜFTUNG

FIG 9

1    1    1    24    19

FIG 10

14    14    24    25
1    1    1    19

FIG 11

26    26
1    1    14    1

FIG 11.1

22    22    22    24
27    27
1    1    1    19

FIG 12

FIG 13

TRANSPORT

FIG 14

MONTAGE

Europäisches
Patentamt

**EUROPÄISCHER RECHERCHENBERICHT**

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | F 24 J 3/02<br>E 04 D 3/24<br>E 04 B 7/08 |
| | FR - A - 2 376 377 (LUCCHETTI)<br>* Seite 2, Zeilen 1-29; Figur 5 * | 1 | |
| | -- | | |
| | DE - A - 2 725 976 (STRAUB)<br>* Seite 10, letzter Absatz - Seite 11, Zeile 4; Figuren 2, 3 * | 2 | |
| | -- | | |
| | FR - A - 2 398 985 (TAC CONSTRUCTION)<br>* Seite 2, Zeile 29 - Seite 3, Zeile 9; Figur 1 * | 2,4 | RECHERCHIERTE SACHGEBIETE (Int. Cl.³)<br><br>F 24 J<br>E 04 B<br>F 25 B<br>C 02 F |
| | -- | | |
| | DE - A - 2 911 571 (HELIHOMME)<br>* Seite 5; Seite 12; Seite 13, Absätze 1,2; Figur 1 * | 1,3,11 | |
| | -- | | |
| | DE - A - 2 814 822 (STIEBEL ELTRON)<br>* Seite 4; Seite 5; Figuren * | 1,3,7, 8,11 | |
| | -- | | |
| | DE - A - 2 413 255 (ZANUSSI)<br>* Seite 3, Zeile 25 - Seite 4, Zeile 11; Figuren 1,2 * | 4 | KATEGORIE DER GENANNTEN DOKUMENTE |
| | -- | | X: von besonderer Bedeutung<br>A: technologischer Hintergrund<br>O: nichtschriftliche Offenbarung<br>P: Zwischenliteratur |
| | DE - A - 2 901 127 (DAIKIN KOGYO)<br>* Seite 12; Figuren 3A,3B * | 5 | T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| | --<br>./. | | |
| | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| Den Haag | 07-08-1981 | SCHOUFOUR |

EPA form 1503.1 06.78

0045821

Europäisches
Patentamt

EUROPÄISCHER RECHERCHENBERICHT

Nummer der Anmeldung

EP 80 10 7664

-2-.

| Kategorie | Kennzeichnung des Dokuments mit Angabe, soweit erforderlich, der maßgeblichen Teile | betrifft Anspruch | KLASSIFIKATION DER ANMELDUNG (Int.Cl. 3) |
|---|---|---|---|
| | FR - A - 2 434 120 (BAS-RHONE/LANGUEDOC)<br><br>* Seite 4, Zeile 15 - Seite 5, Zeile 10; Figuren 1,2 *<br><br>-- | 6 | |
| | GB - A - 1 412 971 (JACKSON)<br><br>* Seite 1, Zeilen 85-87; Seite 2, Zeilen 78-84; Figur 3 *<br><br>-- | 6 | |
| | FR - A - 1 408 950 (SEPCOEUR)<br><br>* Seite 1, rechte Spalte, Zeilen 24-33; Figuren 4,5 *<br><br>-- | 8,11 | RECHERCHIERTE SACHGEBIETE (Int. Cl. 3) |
| | FR - A - 2 185 733 (L'AVENIR)<br><br>*. Figur 1 *<br><br>-- | 1,3,6, 7-11 | |
| | FR - A - 2 083 261 (VILAIN)<br><br>* Insgesamt *<br><br>-- | 12 | |
| | DE - A - 2 202 687 (VELUT)<br><br>* Seite 9, letzter Absatz - Seite 12, Absatz 1; Figuren 1-3 *<br><br>-- | 12 | |
| | US - A - 3 150 707 (HOWELL)<br><br>* Spalte 3, Zeilen 17-30; Spalte 7, Zeile 66 - Spalte 8, Zeile 25; Figuren 1,18,20 *<br><br>--  ./. | 12 | |

**EINSCHLÄGIGE DOKUMENTE**

Europäisches
Patentamt

**EUROPÄISCHER RECHERCHENBERICHT**

| | **EINSCHLÄGIGE DOKUMENTE** | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| A | FR - A - 2 115 125 (LIMA) | 1 | |
| A | DE - A - 1 609 488 (SIEGENER) | 1 | |
| A | FR - A - 2 415 178 (KORZDORFER) | 1 | |
| | ---- | | RECHERCHIERTE SACHGEBIETE (Int. Cl. 3) |

EPA Form 1503.2  08.78